# EUROPEAN PATENT APPLICATION

(11) **EP 2 787 556 A1**
(43) Date of publication of application: **08.10.2014**
(21) Application number: 12854381.6
(22) Date of filing: 30.11.2012
(51) Int. Cl.: H01M 2/10

(54) **BATTERY PACK**

(30) Priority: 30.11.2011 JP 2011261688
(71) Applicant: Panasonic Corporation, Osaka 571-8501 (JP)
(72) Inventor: YASUI, Shunsuke, Osaka 540-6207 (JP); HAMAFUKU, Yukinori, Osaka 540-6207 (JP); NAGAYAMA, Masatoshi, Osaka 540-6207 (JP); NAKASHIMA, Takuya, Osaka 540-6207 (JP); NOYA, Sigeto, Osaka 540-6207 (JP)
(74) Representative: Grünecker, Kinkeldey, Stockmair & Schwanhäusser
(86) International application number: PCT/JP2012/007705
(87) International publication number: WO 2013/080567

(57) **Abstract**

A battery pack 200 includes a plurality of battery modules 100, exterior cases 20a and 20b containing the plurality of battery modules 100, a sensor 40 detecting water inside the exterior cases, and a lid 50 provided for one of the exterior cases 20a and 20b to release the water. The lid 50 is open upon detection of the water by the sensor 40.

## Description

### TECHNICAL FIELD

The present invention relates to battery packs including a plurality of battery modules in their cases.

### BACKGROUND ART

Battery packs, each of which contains a plurality of batteries in a case to output predetermined voltages and capacities, are widely used as power sources of various devices, vehicle bodies, etc. Out of them, techniques have been started to be employed, which connect general-purpose batteries in series/parallel to modulate assembled batteries outputting predetermined voltages and capacities, and combine various types of the battery modules to correspond to various applications. These modulization techniques reduce the sizes and the weights of the battery modules themselves by enhancing the performance of the batteries contained in the battery modules,. This results in an improvement in the workability in assembling the battery packs and the flexibility in mounting the vehicles, etc., in the limited spaces.

For example, assume that a battery pack is mounted in an automobile vehicle, etc. When the vehicle travels on a flooded road, etc., water, etc., may enter the battery pack. To address this problem, a case for containing a plurality of battery modules is usually sealed so that the battery pack has a waterproof function.

On the other hand, batteries forming battery modules are heated in charging and discharging. In order to keep a battery pack at a proper temperature, the battery pack needs to be cooled. However, when the battery pack is cooled, external terminals of the battery modules may be wet with water drops condensed within the battery pack.

Patent Document 1 shows a drain structure of a battery pack, which includes a drain hole at the bottom of the battery pack, and a closing means preventing entry of water from the drain hole under external water pressure. This structure maintains the waterproof properties of the battery pack and drains the condensed water.

### CITATION LIST

### PATENT DOCUMENT

PATENT DOCUMENT 1: Japanese Unexamined Patent Publication No. 2011-173447

### SUMMARY OF THE INVENTION

### TECHNICAL PROBLEM

The battery pack shown in Patent Document 1 maintains the waterproof properties due to the closing means. However, the battery pack may lose the waterproof properties, when subject to pressure, etc., other than external water pressure.

On the other hand, battery packs without drain holes for draining water may lose the sealing properties of their cases, when subject to external shock, etc.

Conventionally, however, the safety of battery packs where the battery packs lose the sealing properties for some reasons and water, etc., enters the battery packs has rarely considered.

The present invention was made in view of the problem. It is a main objective of the present invention to provide a battery pack, which maintains the safety even if the battery pack loses the sealing properties to allow water, etc., to enter the battery pack.

### SOLUTION TO THE PROBLEM

A battery pack according to the present invention includes a plurality of battery modules; an exterior case containing the plurality of battery modules; a sensor configured to detect water inside the exterior case; and a lid provided for the exterior case to release the water. The lid is open upon detection of the water by the sensor.

In a preferred aspect, the battery modules include respective external terminals. The sensor is disposed inside the exterior case, at a same height as the external terminals or at a position lower than the external terminals.

In another preferred aspect, the battery pack further includes an open-topped housing chamber contained in the exterior case and containing the battery modules. The sensor is disposed inside the exterior case, at a same height as an opening-side end of a sidewall of the housing chamber or at a position lower than the height of the opening-side end of the sidewall of the housing chamber.

In yet another preferred aspect, the battery pack further includes a pool provided for the exterior case and configured to store water. The pool rotates under a weight of the water stored in the pool.

In further another preferred aspect, the plurality of battery modules include at least a plurality of battery modules connected in series. A potential difference between a pair of the series-connected battery modules at both ends is 50 V or higher.

The battery pack may be an assembly of a plurality of battery cells.

### ADVANTAGES OF THE INVENTION

The present invention provides a battery pack maintaining the safety, even if the battery pack loses the sealing properties to allow water, etc., to enter the battery pack.

### BRIEF DESCRIPTION OF THE DRAWINGS

[FIG. 1] FIG. 1 is a schematic view of a vehicle mounted with a battery pack.
[FIGS. 2] FIG. 2(a) illustrates that water enters an exterior case. FIG. 2(b) is an equivalent circuit diagram at the occurrence of an external circuit.
[FIG. 3] FIG. 3 is a perspective view illustrating the structure of a battery module according to a first embodiment of the present invention.
[FIG. 4] FIG. 4 is an exploded perspective view of the battery module according to the first embodiment of the present invention.
[FIG. 5] FIG. 5 is a partial cross-sectional view of the battery module according to the first embodiment of the present invention.
[FIG. 6] FIG. 6 is a cross-sectional view illustrating the structure of a battery pack according to the first embodiment of the present invention.
[FIGS. 7] FIGS. 7(a) and 7(b) are cross-sectional views illustrating the structure of a battery pack according to other embodiments of the present invention.
[FIG. 8] FIG. 8 is a cross-sectional view illustrating the structure of a battery pack according to another embodiment of the present invention.
[FIG. 9] FIG. 9 is a cross-sectional view illustrating the structure of a battery pack according to further another embodiment of the present invention.
[FIGS. 10] FIG. 10(a) and 10(b) are cross-sectional views illustrating the structure of a battery pack according to still another embodiment of the present invention.

### DESCRIPTION OF EMBODIMENTS

Before describing embodiments of the present invention, the history of making the present invention will be described.

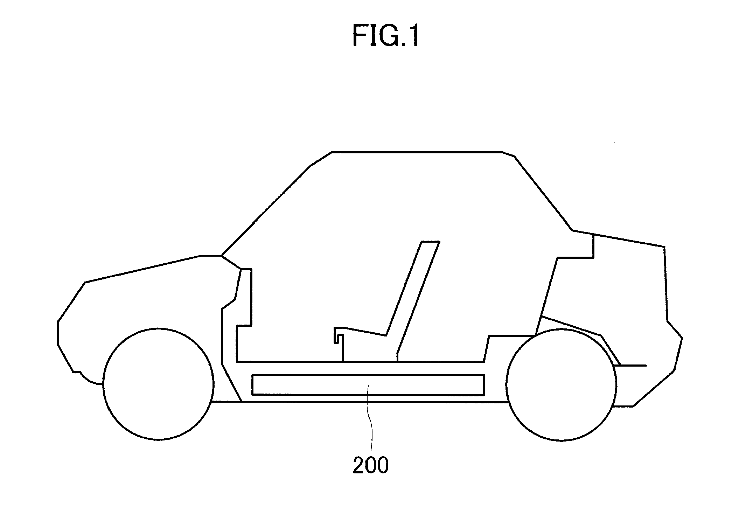

FIG. 1 illustrates an example where a battery pack 200 is mounted in an automobile vehicle, etc. For example, in the example shown in FIG. 1, the battery pack 200 is mounted in the space below seats of the vehicle.

The battery pack 200 includes a plurality of battery modules contained in an exterior case. The exterior case is formed by jointing and sealing the upper exterior case and the lower exterior case together. For example, in view of the facility in maintenance, etc., the upper exterior case and the lower exterior case are bolted by screws etc., with a rubber packing interposed therebetween, thereby sealing the exterior case.

At the joints between the upper exterior case and the lower exterior case, if the packing is loosened by vibrations of the vehicle, external shock, etc., the exterior case may lose the sealing properties. In this case, for example, if the vehicle travels on a flooded road with a depth such that the battery pack 200 submerges in water, the water, etc., is assumed to enter the battery pack 200 from the joints between the upper exterior case and the lower exterior case.

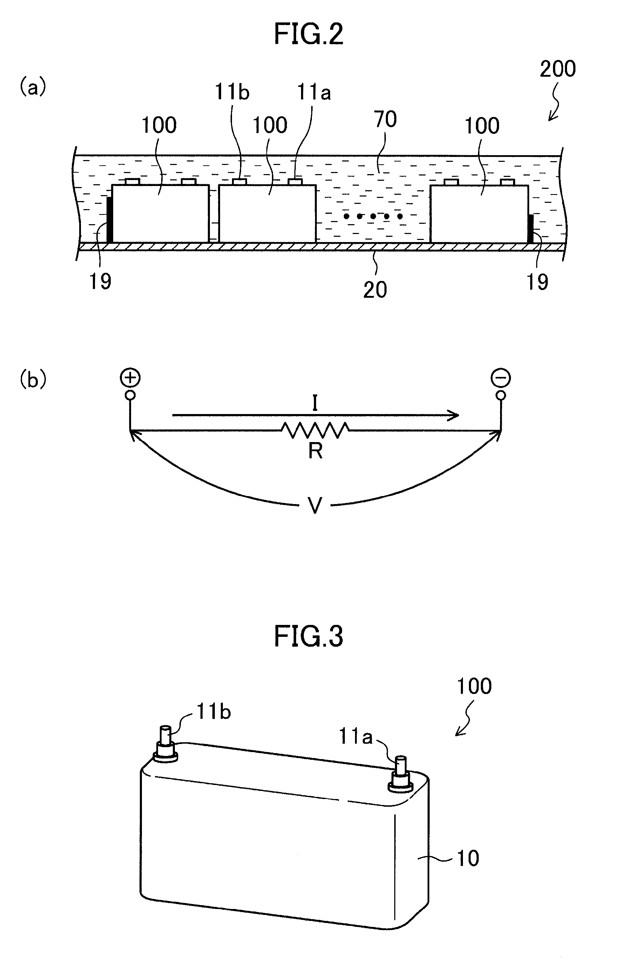

FIG. 2(a) illustrates that water enters an exterior case 20 of the battery pack 200. Each of the battery modules 100 is contained in an insulating case with positive and negative terminals 11 a and 11b exposed. The plurality of battery modules 100 are contained in the exterior case 20. If a large amount of water 70 enters the exterior case 20, as shown in FIG. 2(a), the external terminals 11a and 11b of the battery modules 100 may submerge in the water 70.

Since rainwater usually has an electrical conductivity as low as about 10² µS/cm, currents hardly flow between the external terminals 11 a and 11b, even if the external terminals 11 a and 11b submerge in the rainwater. However, assume that the water on the flooded road is seawater. Seawater has an electrical conductivity of about 10⁴ µS/cm, which is higher than that of rainwater by about two digits. If the external terminals 11a and 11b submerge in the seawater, short-circuit currents may flow between the external terminals 11a and 11b. In particular, in a battery module formed by connecting batteries in series, there is a great potential difference between the external terminals 11a and 11b, and thus large short-circuit currents may flow.

If liquid such as seawater enters between the external terminals 11a and 11b, metal close to the exterior case is dissolved and, for example, as shown in FIG. 2(a), metal 19 is deposited on the surfaces of the cases of the battery modules 100. As a result, metal bonding may occur between the external terminals 11a and 11b and the exterior case 20.

On the other hand, where the battery modules 100 are connected in series, an extremely great potential difference (e.g., 100 V or higher) occurs between the pair of the battery modules 100 at the both ends. If metal bonding occurs between the exterior case 20 and the external terminals 11a and 11b of the battery modules 100 at the both ends, as shown in FIG. 2(b), the positive electrode and the negative electrode of the battery modules 100 at the both ends are connected together by a resistive element (resistor: R) of the metal exterior case 20 with a potential difference V. As a result, a large short-circuit current I may flow to the battery modules 100. If a large current flows to the battery modules 100, a tracking phenomenon (spark phenomenon) may cause ignition.

This ignition caused by the tracking phenomenon is considered to occur with a time lag (e.g., from 30 minutes to several hours) after the seawater has entered the battery pack 200. In particular, direct currents are more likely to cause the tracking phenomenon than alternating currents. In addition, the tracking phenomenon hardly disappears once it occurs. If the traveling vehicle passes through the road flooded with the seawater and the seawater enter the battery pack 200, the ignition caused by the tracking phenomenon does not occur immediately. When the driver parks the vehicle and leaves the vehicle after traveling for a while, the ignition caused by the tracking phenomenon may occur. In this case, if the driver does not notice the ignition caused by the tracking phenomenon, and leaves as it is, the ignition from the battery pack 200 may burn other members in the vehicle in the spreading fire.

The present invention was made based on the findings and provides a battery pack preventing ignition, etc., caused by a tracking phenomenon, even if of the battery pack lose the sealing properties to allow seawater, etc., to enter the battery pack.

Embodiments of the present invention will be described hereinafter in detail with reference to the drawings. The present invention is not limited to the following embodiments. Various modifications and variations may be made without departing from the scope of the present invention. The embodiments may be combined with one another.

FIG. 3 is a perspective view illustrating the structure of each battery module 100 according to the first embodiment of the present invention.

As shown in FIG. 3, the battery module 100 is contained in an insulating case 10 with the positive and negative external terminals 11a and 11b exposed.

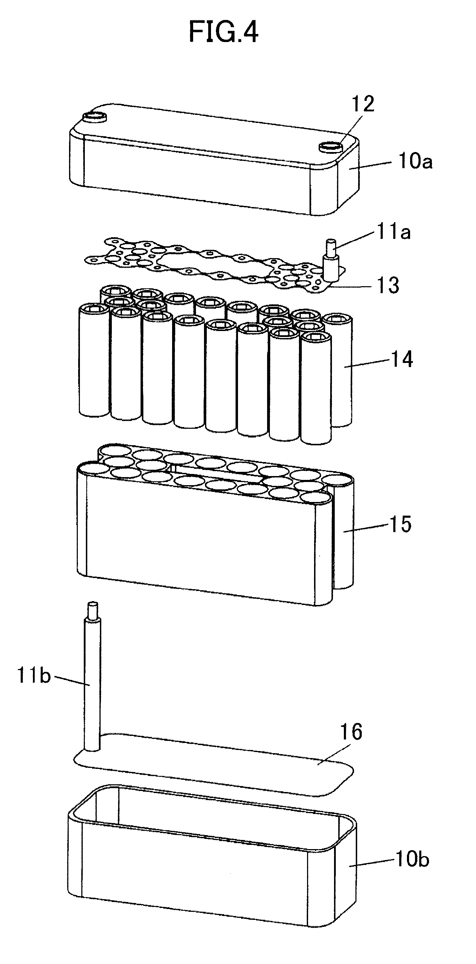

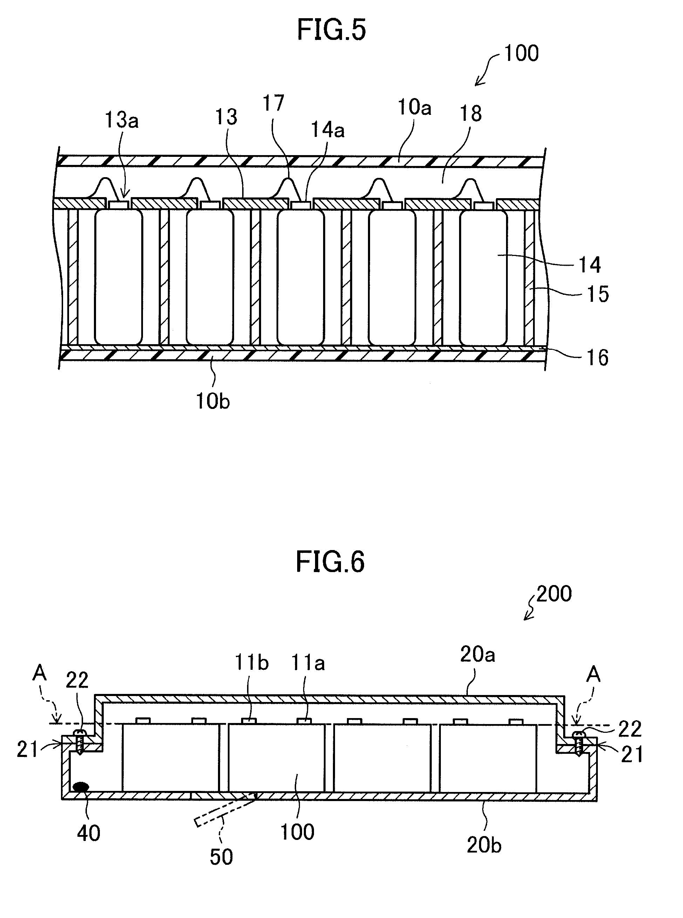

FIG. 4 is an exploded perspective view of the battery module 100. FIG. 5 is a partial cross-sectional view of the battery module 100.

As shown in FIGS. 4 and 5, a plurality of batteries 14 are inserted into a plurality of respective hollows formed in a housing section 15. A positive electrode bus bar 13 is provided at positive electrode terminals 14a of the batteries 14. The positive electrode terminals 14a of the batteries 14 are connected to the positive electrode bus bar 13 by connecting members 17 via openings 13a formed in the positive electrode bus bar 13. A negative electrode bus bar 16 is disposed at negative electrode terminals of the batteries 14 (i.e., the bottom of the battery case). As a result, the plurality of batteries 14 are connected in parallel by the positive electrode bus bar 13 and the negative electrode bus bar 16.

The housing section 15 containing the plurality of batteries 14 is contained in a lower case 10b, and sealed by an upper case 10a. The end of the positive electrode bus bar 13 is connected to the positive electrode external terminal 11 a. The end of the negative electrode bus bar 16 is connected to the negative electrode external terminal 11b. The both external terminals 11 a and 11b are exposed outside through holes 12 formed in the upper surface of the upper case 10a.

Each of the batteries 14 contained in the housing section 15 is sealed by a partition of the housing section 15, the positive electrode bus bar 13, and the negative electrode bus bar 16. An exhaust duct 18 is formed between the upper case 10a and the positive electrode bus bar 13. The positive electrode terminals 14a of the batteries 14 are provided with openings (not shown) exhausting gas generated in the batteries 14. The gas generated in the batteries 14 is exhausted through the openings to the exhaust duct 18, and then released outside from an outlet (not shown) formed in the upper case 10a.

The batteries 14 contained in the battery module 100 are not particularly limited, but may be, for example, cylindrical lithium-ion batteries, etc.

In the present invention, each "battery module" is an assembly of a plurality of batteries contained in an insulating case, and is not distinguished from, for example, a battery block and an assembled battery.

FIG. 6 is a cross-sectional view illustrating the structure of the battery pack 200 according to this embodiment.

As shown in FIG. 6, the battery pack 200 is an assembly of the plurality of battery modules 100. The battery modules 100 are contained in the insulating case with the external terminals 11a and 11b exposed. The plurality of battery modules 100 are contained in the exterior case. The exterior case is formed by jointing and sealing the upper exterior case 20a and the lower exterior case 20b together.

The exterior case is provided with a sensor 40 detecting water entering the exterior case. A lid 50, which is open in response to a detection signal indicating that the sensor 40 detects the entry of the water into the exterior case, is provided at the bottom of the lower exterior case 20b.

With this structure, even if joints 21 between the upper exterior case 20a and the lower exterior case 20b loosen to allow seawater, etc., to enter the battery pack 200 from the joints 21, the sensor 40 detects the entry of the water into the exterior case. Then, the lid 50 provided at the bottom of the lower exterior case 20b is open in response to the detection signal indicating that the entry of the water into the exterior case is detected, thereby releasing the water in the exterior case to the outside before the external terminals 11 a and 11b submerged in the water.

With this structure, even if the water entering the battery pack 200 contains seawater, etc., with a high electrical conductivity, no large short-circuit current flows to the external terminals 11 a and 11b. As a result, ignition caused by the tracking phenomenon, etc., due to a short-circuit current is prevented to ensure the safety of the battery pack.

The advantages of the present invention are particularly provided where the battery pack 200 contains the plurality of battery modules 100 connected in series, and the potential difference between the pair of the series-connected battery modules at the both ends is 50 V or higher.

The sensor 40 in this embodiment may be any type of sensor, as long as it detects water. For example, a leakage detection sensor, etc., reading a change in the resistance may be used.

The lid 50 may have any mechanism, as long as the lid 50 is opened and closed in response to an electrical detection signal from the sensor 40. For example, an actuator, etc., controlled by a motor may be used. Alternatively, it may have a mechanism opening and closing the lid by unlocking with a switch or the like.

The position of the exterior case in the sensor 40 is not limited. For example, the sensor 40 may be provided in the exterior case at a lowermost position, thereby immediately detecting the water entering the exterior case.

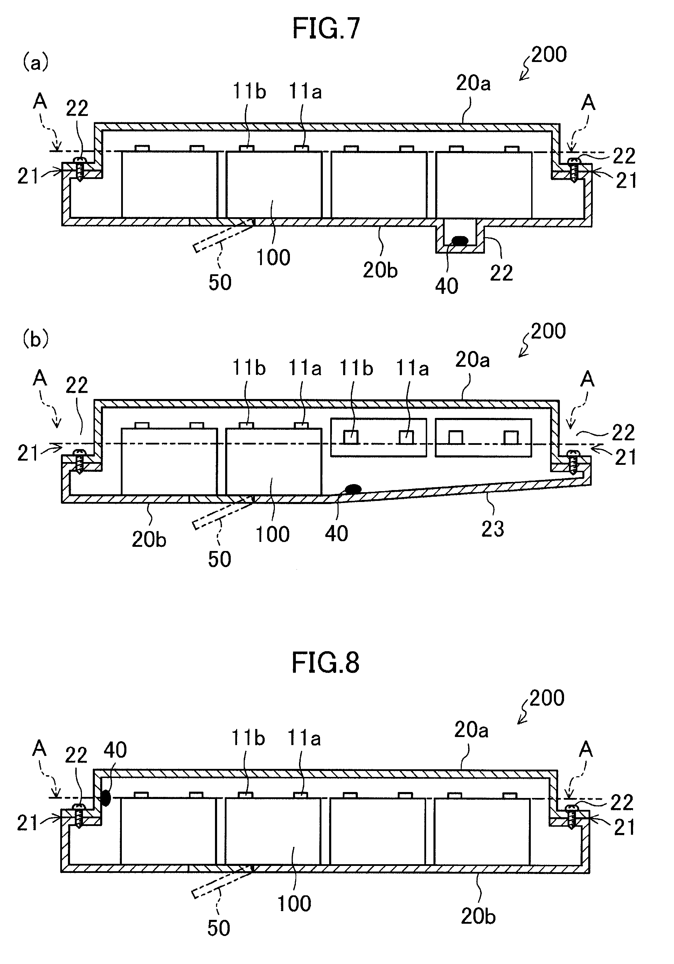

As shown in FIGS. 7(a) and (b), a recess 22 or a slope 23 may be provided at the bottom of the lower exterior case 20b, and the sensor 40 may be provided in the recess 22 or at the slope 23. In this case, the water entering the exterior case is accumulated in the recess 22 or flows down the slope 23, thereby immediately detecting the water entering the exterior case.

As described above, if seawater, etc., enters the battery pack 200 to allow the external terminals 11a and 11b to submerge, ignition caused by a tracking phenomenon (spark phenomenon) is considered to occur with a time lag (e.g., 30 minutes to several hours) after the submerge.

In view of this, as shown in FIG. 8, the sensor 40 may be provided at the position corresponding to the lowermost one of the external terminals 11a and 11b of the plurality of battery modules 100 in the exterior case.

In this case, the lid 50 is open in response to the detection signal indicating that the sensor 40 detects that the height of the water entering the exterior case reaches the position of the lowermost one of the external terminals 11a and 11b of the plurality of battery modules 100.

With this structure, if the external terminals 11a and 11b submerge in the water, the lid 50 is immediately open to release the water in the exterior case to the outside.

With this structure, even if the water entering the battery pack 200 contains seawater, etc., with a high electrical conductivity, no large short-circuit current flows to the external terminals 11 a and 11b. This results in a reduction in the ignition caused by the tracking phenomenon due to a short-circuit current to ensure the safety of the battery pack.

In the example shown in FIG. 8, since the battery modules 100 with the same height are arranged in the same direction, the external terminals 11a and 11b are located at the same height indicated by the arrow A. In this case, the sensor 40 may be provided at the position corresponding to the line indicated by the arrow A.

In the example shown in FIG. 8, the sensor 40 is disposed inside the exterior case at the same height as the external terminals 11a and 11b. However, similar advantages are provided even where the sensor 40 is disposed at a position lower than the external terminals 11a and 11b.

As long as the lid 50 is open upon detection of the water by the sensor 40 to release the water entering the exterior case to the outside, the position of the lid 50 in the exterior case is not particularly limited. For example, the lid 50 may be provided on the side surface of the exterior case at a position lower than the external terminals 11 a and 11b. Alternatively, as shown in FIG. 8, where the sensor 40 is disposed at the same height as the external terminals 11a and 11b or at a position lower than the external terminals 11a and 11b, the lid 50 may be provided at a position lower than the sensor 40.

As shown in FIG. 6, the joints 21 between the upper exterior case 20a and the lower exterior case 20b are preferably located at a position lower than the lowermost one of the external terminals 11a and 11b of the plurality of battery modules 100.

With this structure, the external terminals 11 a and 11b of the battery modules 100 are located at the higher position than the joints 21. Even if water keeps entering until the external terminals 11a and 11b submerge, the time of the submersion is largely delayed.

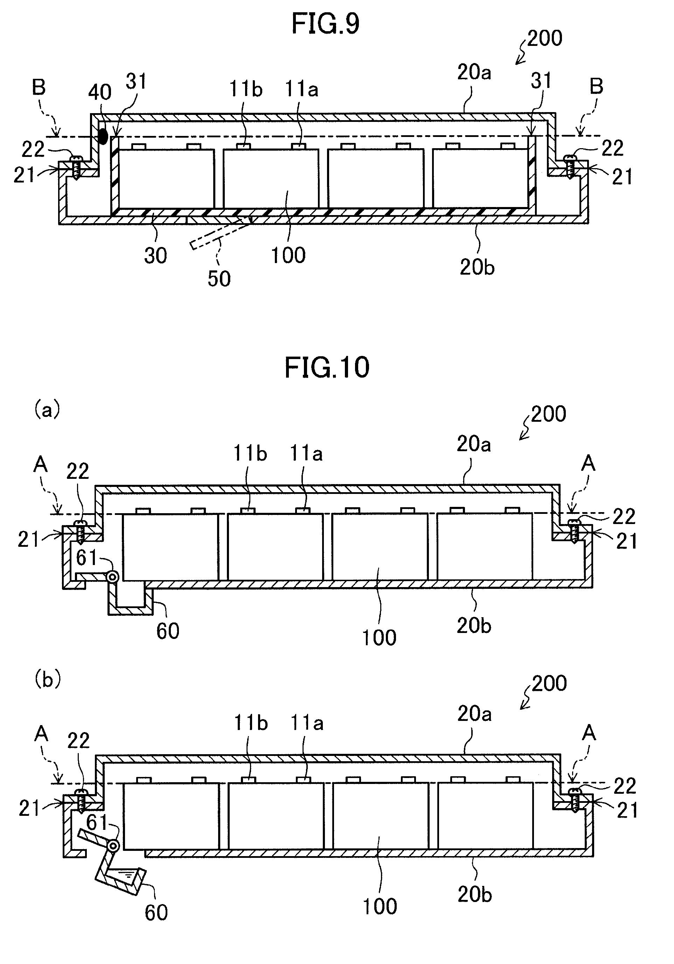

As shown in FIG. 9, the plurality of battery modules 100 may be contained in the exterior case in an open-topped housing chamber 30. In this case, the sensor 40 is preferably disposed in the exterior case in a position corresponding to an opening-side end 31 of a sidewall of the housing chamber 30.

In this case, the lid 50 is open in response to the detection signal indicating that the sensor 40 detects that the water entering the exterior case reaches the height of the opening-side end 31 of the sidewall of the housing chamber 30.

In the example shown in FIG. 9, the sensor 40 is disposed inside the exterior case, at the height of the opening-side end 31 of the sidewall of the housing chamber 30. However, similar advantages are provided even if the sensor 40 is disposed at a position lower than the height of the opening-side end 31 of the sidewall of the housing chamber 30.

In this embodiment, the structures, materials, etc. of the upper exterior case 20a and the lower exterior case 20b are not particularly limited. The advantages of the present invention are particularly provided, where the lower exterior case 20b is made of a metal material.

The joints between the upper exterior case 20a and the lower exterior case 20b are preferably detachable to facilitate the maintenance etc., of the battery pack 200. For example, the upper exterior case 20a and the lower exterior case 20b may be bolted together with screws etc., with a rubber packing interposed therebetween. Welding has excellent sealing properties, but is not preferable since the maintenance etc., of the battery pack 200 becomes difficult.

For example, where the battery pack 200 is mounted in an automobile vehicle, etc., the lower exterior case 20b may also serve as part of the structure of the vehicle (e.g., a floor chassis).

As shown in FIG. 10(a), in place of the lid 50, a rotatable pool 60 storing a predetermined amount of water entering the exterior case may be provided at the bottom of the lower exterior case 20b. In this case, as shown in FIG. 10(b), the pool 60 rotates around a rotation axis 61 under the weight of the water stored in the pool 60 to release the water entering the exterior case to the outside.

As above, the present invention has been descried using the preferable embodiments. Such description is not to be taken in a limiting sense. Clearly, various modifications and variations may be made. For example, while in the above-described embodiments, the battery pack 200 is formed by assembling the plurality of battery modules 100, it may be formed by assembling a plurality of batteries. In this case, the batteries are contained in respective insulating battery cases with electrode terminals exposed, and the plurality of batteries are contained in an exterior case. The exterior case is formed by jointing and sealing an upper exterior case and a lower exterior case.

### INDUSTRIAL APPLICABILITY

The present invention is useful for power sources for driving vehicles, electric motorcycles, or electric playing tools, etc.

### DESCRIPTION OF REFERENCE CHARACTERS

- 10: Case
- 10a: Upper Case
- 10b: Lower Case
- 11a, 11b: External Terminals
- 12: Hole
- 13: Positive Electrode Bus Bar
- 13a: Opening
- 14: Battery
- 14a: Electrode Terminal (Positive Electrode Terminal)
- 15: Housing Section
- 16: Negative Electrode Bus Bar
- 17: Connecting Member
- 18: Exhaust Duct
- 20: Exterior Case
- 20a: Upper Exterior Case
- 20b: Lower Exterior Case
- 21: Joint
- 22: Recess
- 23: Slope
- 30: Housing Chamber
- 31: Opening-Side Sidewall End
- 40: Sensor
- 50: Lid
- 60: Pool
- 61: Rotation Axis
- 100: Battery Module
- 200: Battery Pack

## Claims

1. A battery pack comprising:
a plurality of battery modules;
an exterior case containing the plurality of battery modules;
a sensor configured to detect water inside the exterior case; and
a lid provided for the exterior case to release the water, wherein
the lid is open upon detection of the water by the sensor.

2. The battery pack of claim 1, wherein
the exterior case includes
an upper exterior case and
a lower exterior case, and
the lid is provided for the lower exterior case.

3. The battery pack of claim 1 or 2, wherein
the battery modules include respective external terminals, and
the sensor is disposed inside the exterior case, at a same height as the external terminals or at a position lower than the external terminals.

4. The battery pack of claim 3, wherein
the sensor is disposed inside the exterior case, at a same height as a lowermost one of the external terminals or at a position lower than the lowermost one of the external terminals.

5. The battery pack of any one of claims 1-4, wherein
the plurality of battery modules include respective external terminals,
the exterior case includes
an upper exterior case,
a lower exterior case, and
a joint jointing the upper exterior case and the lower exterior case together, and
the joint is located at a position lower than a lowermost one of the external terminals of the plurality of battery modules.

6. The battery pack of any one of claims 1-5, wherein
a recess or a slope is provided at a bottom of the exterior case, and
the sensor is provided in the recess or at the slope.

7. The battery pack of any one of claims 1-6, wherein
the sensor is disposed in the exterior case at a lowermost position.

8. The battery pack of claim 1 or 2, further comprising:
an open-topped housing chamber contained in the exterior case and containing the battery modules, wherein
the sensor is disposed inside the exterior case, at a same height as an opening-side end of a sidewall of the housing chamber or at a position lower than the height of the opening-side end of the sidewall of the housing chamber.

9. The battery pack of claim 8, wherein
the exterior case includes
an upper exterior case,
a lower exterior case, and
a joint jointing the upper exterior case and the lower exterior case together, and
the joint is located at a position lower than the opening-side end of the sidewall of the housing chamber.

10. A battery pack comprising:
a plurality of battery modules;
an exterior case containing the plurality of battery modules; and
a pool provided for the exterior case and configured to store water, wherein
the pool rotates under a weight of the water stored in the pool.

11. The battery pack of any one of claims 1-10, wherein
the plurality of battery modules include at least a plurality of battery modules connected in series, and
a potential difference between a pair of the series-connected battery modules at both ends is 50 V or higher.

12. A battery pack comprising:
a plurality of batteries;
an exterior case containing the plurality of batteries;
a sensor configured to detect water inside the exterior case; and
a lid provided for the exterior case to release the water,
wherein the lid is open upon detection of the water by the sensor.

13. The battery pack of claim 12, wherein
the sensor is disposed in the exterior case at a lowermost position.

14. The battery pack of claim 12 or 13, wherein
the batteries include respective electrode terminals, and
the sensor is disposed inside the exterior case, at a same height as a lowermost one of the electrode terminals or at a position lower than the lowermost one of the electrode terminals.

15. The battery pack of any one of claims 12-14, further comprising:
an open-topped housing chamber contained in the exterior case and containing the batteries, wherein
the sensor is disposed inside the exterior case, at a same height as an opening-side end of a sidewall of the housing chamber or at a position lower than the height of the opening-side end of the sidewall of the housing chamber.

16. A battery pack comprising:
a plurality of batteries;
an exterior case containing the plurality of batteries; and
a pool provided for the exterior case and configured to store water, wherein
the pool rotates under a weight of the water stored in the pool.

17. The battery pack of any one of claims 12-16, wherein
the plurality of batteries include at least a plurality of batteries connected in series, and
a potential difference between a pair of the series-connected batteries at both ends is 50 V or higher.
